# EUROPEAN PATENT APPLICATION

(11) **EP 1 466 951 A1**
(43) Date of publication of application: **13.10.2004**
(21) Application number: 04075747.8
(22) Date of filing: 08.03.2004
(51) Int. Cl.: C09D 11/00, C08F 14/00

(54) **Ink jet ink composition and printing method**

(30) Priority: 20.03.2003 US 393235
(71) Applicant: EASTMAN KODAK COMPANY, Rochester, New York 14650 (US)
(72) Inventor: Wang, Xiaoru, c/o Eastman Kodak Company, Rochester, New York 14650-2201 (US); Brick, Mary C. c/o Eastman Kodak Company, Rochester, New York 14650-2201 (US); Chen, Huijuan D., c/o Eastman Kodak Company, Rochester, New York 14650-2201 (US); Frazier, Ricky G., c/o Eastman Kodak Company, Rochester, New York 14650-2201 (US)
(74) Representative: Weber, Etienne Nicolas

(57) **Abstract**

This invention relates to an ink jet ink composition comprising polymer dye particles, said polymer dye particles comprising a polymer phase associated with a water-insoluble dye, wherein said polymer phase comprises at least one halogenated vinyl monomer. It further relates to methods of printing using the ink jet ink composition.

## Description

### FIELD OF THE INVENTION

This invention related to an ink jet ink composition comprising polymer dye particles, said particles comprising a water insoluble dye, and a polymer phase of a certain monomeric composition. The invention further relates to an ink jet printing method using said ink jet ink composition.

### BACKGROUND OF THE INVENTION

Ink jet printing is a non-impact method for producing images by the deposition of ink droplets on a substrate (paper, transparent film, and fabric) in response to digital signals. Ink jet printers have found broad applications across markets ranging from industrial labeling to short run printing to desktop document and pictorial imaging.

The inks used in various ink jet printers can be classified as either dye-based or pigment-based. Pigment-based inks have some deficiencies. For example, pigment-based inks interact differently with specially coated papers and films, such as transparent films used for overhead projection and glossy papers or opaque white films used for high quality graphics and pictorial output. This results in images that have poor dry and wet adhesion properties and that can be easily smudged.

Another deficiency from which pigmented inks suffer is their poor storage stability due to the presence of a water-miscible organic solvent. Water-miscible organic solvents are used to adjust ink rheology, to maximize ink firability, and re-runability. These solvents prevent ink from drying in a printing head and lower ink surface tension to minimize the effect of air-entrapment in an ink formulation. Such air entrapment generates air bubbles which can seriously affect the head performance. Unfortunately, these water-miscible organic solvents can also have a negative effect on the colloidal stability of pigment particles in an ink formulation.

A dye is a colorant which is molecularly dispersed or solvated by a carrier medium. The carrier medium can be a liquid or a solid at room temperature. Known ink jet inks generally comprise a water soluble dye which is soluble in an ink vehicle such as water or a mixture comprising water and a known water soluble or water miscible organic solvent. Inks comprising these soluble dyes may exhibit many problems, such as low optical densities on plain paper, poor water fastness, poor lightfastness, clogging of the jetting channels as a result of solvent evaporation, and changes in the solubility of the dyes, dye crystallization and ink bleeding. There is a need to develop a water resistant dye-based ink and to improve the existing inks. More specifically, there is a need to develop inks that provide high quality prints on a wide variety of recording media, including plain paper. Particularly, there is a great need to develop dye-based inks which have high optical densities on receivers and also superior lightfastness and colorfastness. These and other needs may be achievable in embodiments of the present invention.

Oil soluble (water insoluble) dyes have been studied to achieve these requirements. Some inks use organic solvents, but such inks have environmental considerations. Water-based oil soluble dye inks have the advantages of low pollution, low price, and good quality. It is difficult, however, to form a stable dispersion of oil soluble dye in water media. WO 98/14524 and U.S. Patent 6,555,168 disclose oil soluble colorants which have been dissolved in organic solvents and added to aqueous polymer latexes slowly under agitation. After mixing, the organic solvent is evaporated and the colorant is loaded into the polymer particles. The mixture is used to formulate ink jet inks with the addition of water, humectants, and some other additives. U.S. Patent 5,958,998 discloses an ink composition containing an oil soluble colorant. The composition is made by flushing pigment into a sulfonated polyester resin having a degree of sulfonation of about 2.5 to about 20 mol percent, dispersing the pigmented polyester resin in water at a temperature of from about 40°C - 95°C, and thereafter separating and mixing. The dispersing is done by a shearing device operating at speeds of 100 to 5000 revolutions per minute which yields stable pigmented submicron sized particles of from about 5 to about 150 nanometers. However, the amount of colorant that may be loaded in the polymer is limited.

JP 00297126A discloses a process for making an ink composition wherein polymer-colorant particles are prepared using a batch emulsion polymerization process employing colorant, monomers, and an initiator. This process, however, involves more micelle particle nucleation to produce polymer particles. When formulated into an ink jet ink, the presence of free polymers (both polymer particles and water-soluble polymers) can significantly increase ink viscosity, decrease ink storage stability, cause premature printing head failure, and generate image defects. U.S. Applications 10/020,694 and 10/017,729, both filed on December 14, 2001, disclose a process of making encapsulated polymer-dye particles used in ink jet ink which have improved image quality and stability.

There is, however, still a need for a colorant particle dispersion that has improved compatibility with water miscible ink solvents and improved stability in an ink jet composition. There is further a need for an ink composition which, when printed, provides images on the surface of an ink jet recording element having improved image quality, improved physical durability such as scratch and smudging resistance, and improved image stability such as colorfastness, especially ozone stability and water fastness.

### SUMMARY OF THE INVENTION

This invention provides an ink jet ink composition comprising polymer dye particles, said polymer dye particles comprising a polymer phase associated with a water-insoluble dye, wherein said polymer phase comprises at least one halogenated vinyl monomer. This invention further provides an ink jet printing method, comprising the steps of:
A) providing an ink jet printer that is responsive to digital data signals;
B) loading said printer with an ink jet recording element comprising a support having thereon an image-receiving layer;
C) loading said printer with an ink jet ink composition comprising polymer dye particles, said polymer dye particles comprising a polymer phase associated with a water-insoluble dye, wherein said polymer phase comprises at least one halogenated vinyl monomer;
D) printing on said image-receiving layer using said ink jet ink composition in response to said digital data signals.

The particular class of polymers used in the current invention gives significant improvement in the dye ozone stability (thus providing ink with good ozone stability) as well as ink colloid stability. Such inks also have good water fastness and good resistance to abrasion compared to those prepared by the prior art.

### DETAILED DESCRIPTION OF THE INVENTION

In accordance with the present invention, the ink jet ink composition comprises polymer dye particles, said particles comprising a polymer phase and a water-insoluble dye, wherein the polymer phase contains at least one halogenated vinyl monomer. The polymer dye particles can be made by any method known to those skilled in the art but two processes are preferred. The water-insoluble dye can be encapsulated to form dye-polymer particles by the emulsion polymerization process described in US Patent Application Serial No. 10/020,694 said process utilizing at least one halogenated monomer. The water insoluble dye can also be loaded into preformed polymer particles containing at least one halogenated vinyl monomer. This process is known as dye loading.

Generally, to make the polymer dye particles by the emulsion polymerization process, a colorant mixture is formed which comprises a water insoluble dye and an organic medium containing at least one halogenated vinyl monomer. The colorant mixture is combined with an aqueous mixture comprising a surfactant and a co-stabilizer to form a colorant mixture/aqueous mixture. The colorant mixture/aqueous mixture is strongly agitated to form a stable aqueous droplet mixture. Then polymerization is initiated to form composite polymer dye particles comprising a colorant phase and a polymer phase. An addition polymerization initiator is added at some point prior to initiating polymerization. The halogenated vinyl monomer used in the present invention can itself be an ethylenically unsaturated monomer capable of addition polymerization. The halogenated vinyl monomer can also form a copolymer with additional ethylenically unsaturated monomers capable of addition polymerization. In one preferred embodiment the polymer phase formed by this method is a copolymer, and more preferably a cross-linked copolymer.

As noted, the polymer dye particles can also be prepared by a dye loading process. Several such processes are known. All the methods produce a dispersion of colored particulates composed of an oil-soluble dye and polymer dispersed in an aqueous solution, but each method achieves this result by a different process. Examples of three preferred methods are given, but are not meant to be exclusive, and other methods known in the art to produce dye-loaded latex dispersions may be used. In these processes dye is loaded onto already formed polymer particles. The polymer particles comprise at least one halogenated monomer. The halogenated vinyl monomer may be an ethylenically unsaturated monomer capable of addition polymerization. The polymer particles may also comprise additional ethylenically unsaturated monomers capable of addition polymerization. In one preferred embodiment the polymer is a copolymer.

In a first and preferred method, the oil-soluble dye is dissolved in an organic solvent to form a colorant solution. The colorant solution is then combined with an aqueous mixture, said aqueous mixture comprising polymer particles comprising at least one halogenated vinyl monomer and a water-miscible surfactant, to form a colorant mixture/aqueous mixture. The colorant mixture/aqueous mixture may be subjected to high-shear mixing if desired, using, for example, devices such as high pressure homogenization, colloid mill, sonication, and the like to facilitate the loading of the dye into the polymer particle. The agitation causes the colorant mixture/aqueous mixture to form a dispersion of dye particles and polymer particles. The mixing step is followed by removal of the organic solvent from the mixture, preferably by evaporation, giving an aqueous dispersion of colored particulates composed of an oil-soluble dye (water insoluble) and polymer dispersed in an aqueous solution.

In a second method, the oil-soluble dye is dissolved in an organic solvent and added to an aqueous solution containing a water-miscible surfactant. The solvent-water mixture may be subjected to high-shear mixing if desired, using, for example, devices such as high pressure homogenization, colloid mill, sonication and the like, to reduce the particle size of the solvent droplets. The organic solvent is removed from the mixture to produce a solvent-free, particulate dispersion of the dye in an aqueous solution. The aqueous dye dispersion is combined with a water-miscible surfactant and an aqueous dispersion of the polymer particles. If desired, the mixture may be held for an extended period of time at elevated temperatures to facilitate the loading of the dye into the polymer particles. After the equilibration period, a dispersion of colored particulates composed of an oil-soluble dye and polymer dispersed in an aqueous solution is produced.

In a third method, the oil-soluble dye and polymer are co-dissolved in an organic solvent and combined with an aqueous solution containing a water-miscible surfactant. The mixture may be subjected to high-shear mixing if desired, using, for example, devices such as high pressure homogenization, colloid mill, and sonication to reduce the particle size of the solvent droplets and/or facilitate the loading of the dye into the polymer particles. The mixing step is followed by removal of the organic solvent from the mixture, giving a dispersion of colored particulates composed of an oil-soluble dye and polymer dispersed in an aqueous solution.

The organic solvents used to prepare the colorant mixture can be either water-miscible or water-immiscible and can be selected on the basis of solubility of the oil-soluble dye and polymer. Examples of, but not exclusively, useful organic solvents include ester solvents such as ethyl acetate, butyl acetate, and isopropyl acetate; ketone solvents such as acetone, methyl ethyl ketone, and diethyl ketone; alcohols such as methanol, ethanol, 2-propanol 1-propanol, 1-butanol, and tert-butanol; chlorine solvents such as chloroform, and methylene chloride; aromatic solvents such as benzene and toluene; ether solvents such as tetrahydrofuran, diethyl ether, dioxane, and the like; glycol ether solvents such as ethylene glycol monomethyl ether, ethylene glycol dimethyl ether, amide solvents such as 1-methyl-2-pyrrolidone, N,N-dimethylacetamide, and N,N-dimethylformamide; sulfoxide solvents such as dimethylsulfoxide; and nitrile solvents such as acetonitrile.

A single one of these solvents may be used, or two or more of these solvents may be used in combination. The amount of organic solvent is not particularly limited, provided that it falls within a range so as not to impair the effects of the present invention. If the vapor pressure of the organic solvent is greater than that of water, then it is preferable to remove the organic solvent by evaporation. Evaporation of the organic solvent may be carried out from 10°C to 100°C under a pressure between atmospheric pressure and reduced pressure.

A dispersing aid and/or dispersion stabilizer may be added to, or used in the preparation of the dye loaded polymer dye particles. Examples of the dispersing aid and dispersion stabilizer are cationic, anionic, and nonionic surfactants, water-soluble and water-dispersible polymers, and oligomers. Specific examples are described in "McCutcheon's Emulsifiers and Detergents: 1995, North American Editon" and are known to those skilled in the art. The amount of the dispersing aid or dispersion stabilizer can be 0 to 100% by mass, with respect to the total mass of the mixture, and is preferably 10 to 100% by mass, with respect to the total mass of the oil-soluble dye and polymer.

The ink jet ink composition of the invention may comprise water as a continuous phase and the polymer dye particles as a dispersed phase. In a preferred embodiment of the invention, the polymer dye particle dispersion meets the following test: At 25° C the polymer dye particles must: (a) be capable of forming a stable dispersion with water at a concentration of from 0.2 to 50 percent by weight, preferably 1 to 20 percent by weight, and (b) when 100 ml of the polymer dye particle dispersion is then mixed in an equal volume of a water-miscible organic solvent as described herein, stirred, and allowed to stand for 10 minutes exhibit no observable coagulation of the polymer dye particles. In order to be useful in the ink, the polymer dye particles should have an average particle size of < 1 µm, preferably < 0.2 µm. It is preferred that the polymer phase of the polymer dye particles have a molecular weight of at least 5000.

A broad range of water-insoluble dyes may be used in the invention such as an oil dye, a disperse dye, or a solvent dye, such as Ciba-Geigy Orasol Red G, Ciba-Geigy Orasol Blue GN, Ciba-Geigy Orasol Pink, and Ciba-Geigy Orasol Yellow. Preferred water-insoluble dyes can be xanthene dyes, methine dyes, polymethine dyes, anthroquinone dyes, merocyanine dyes, azamethine dyes, azine dyes, quinophthalone dyes, thiazine dyes, oxazine dyes, phthalocyanine dyes, mono or poly azo dyes, and metal complex dyes. More preferably, the water insoluble dyes can be an azo dye such as a water insoluble analog of the pyrazoleazoindole dye disclosed in U.S. Patent 6,468,338; the arylazoisothiazole dye disclosed in U. S. Patent 4,698,651; or a metal-complex dye, such as the water-insoluble analogues of the dyes described in U.S. Patents 5,997,622 and 6,001,161, i.e., a transition metal complex of an 8-heterocyclylazo-5-hydroxyquinoline. The solubility of the water insoluble dye used in the present invention should be less than 1 g/L in water, and more preferably less than 0.5 g/L in water at 25° C.

The water insoluble dye can be present in any effective amount in the ink of the present invention, usually up to about 20% by weight of an ink jet ink composition, and preferably from about 0.05 to 15 wt. %. Normally, the weight ratio of the water insoluble dye to the polymer phase is from about 10:90 to 90:10.

The polymer phase used in this invention can be a homopolymer, copolymer, or cross-linked polymer prepared with at least one halogenated vinyl monomer, and optionally other ethylenically-unsaturated monomers such that the particles can be stabilized in a water-based medium. The polymer phase is comprised of at least 5 mol % halogenated vinyl monomer units based on the total monomer units in the polymer phase, and more preferably the polymer phase is comprised of at least 20 mol % halogenated vinyl monomer units based on the total monomer units in the polymer phase, and even more preferably at least 40 mol % halogenated vinyl monomer units based on the total monomer units in the polymer phase. The polymer phase may comprise up to 100 mol % halogenated vinyl monomer units based on the total monomer units in the polymer phase, but more preferably it is comprised of less than 90 mol % halogenated vinyl monomer units based on the total monomer units in the polymer phase.

Suitable halogenated monomers include, but are not limited to, vinyl chloride, vinylidene chloride, vinyl fluoride, vinylidene fluoride, vinyl bromide and vinylidene bromide, and chloromethacrylic acid. Chloride is the preferred halogen.

In one embodiment the polymer phase contains an ethylenically-unsaturated monomer capable of addition polymerization. The ethylenically-unsaturated monomers which can be used in the invention include, for example, the following monomers and their mixtures: acrylic acid, methacrylic acid, ethacrylic acid, methyl acrylate, ethyl acrylate, ethyl methacrylate, benzyl acrylate, benzyl methacrylate, propyl acrylate, propyl methacrylate, iso-propyl acrylate, iso-propyl methacrylate, butyl acrylate, butyl methacrylate, hexyl acrylate, hexyl methacrylate, octadecyl methacrylate, octadecyl acrylate, lauryl methacrylate, lauryl acrylate, hydroxyethyl acrylate, hydroxyethyl methacrylate, hydroxyhexyl acrylate, hydroxyhexyl methacrylate, hydroxyoctadecyl acrylate, hydroxyoctadecyl methacrylate, hydroxylauryl methacrylate, hydroxylauryl acrylate, phenethylacrylate, phenethyl methacrylate, 6-phenylhexyl acrylate, 6-phenylhexyl methacrylate, phenyllauryl acrylate, phenyllaurylmethacrylate, 3-nitrophenyl-6-hexyl methacrylate, 3-nitrophenyl-18-octadecyl acrylate, ethyleneglycol dicyclopentyl ether acrylate, vinyl ethyl ketone, vinyl propyl ketone, vinyl hexyl ketone, vinyl octyl ketone, vinyl butyl ketone, cyclohexyl acrylate,3-methacryloxypropyl-dimethylmethoxysilane, 3-methacryloxypropyl-methyldimethoxysilane, 3-methacryloxypropyl-pentamethyldisiloxane, 3-methacryloxypropyltris-(trimethylsiloxy)silane, 3-acryloxypropyldimethylmethoxysilane, acryloxypropylmethyldimethoxysilane, trifluoromethyl styrene, trifluoromethyl acrylate, trifluoromethyl methacrylate, tetrafluoropropyl acrylate, tetrafluoropropyl methacrylate, heptafluorobutyl methacrylate, isobutyl acrylate, isobutyl methacrylate, 2-ethylhexyl acrylate, 2-ethylhexyl methacrylate, isooctyl acrylate, isooctyl methacrylate, N,N-dihexyl acrylamide, N,N-dioctyl acrylamide, N,N-dimethylaminoethyl acrylate, N,N-dimethylaminoethyl methacrylate, N,N-diethylaminoethyl acrylate, N,N-diethylaminoethyl methacrylate, piperidino-N-ethyl acrylate, vinyl propionate, vinyl acetate, vinyl butyrate, vinyl butyl ether, and vinyl propyl ether ethylene, styrene, vinyl carbazole, vinyl naphthalene, vinyl anthracene, vinyl pyrene, methyl methacrylate, methyl acrylate, alpha-methylstyrene, dimethylstyrene, methylstyrene, vinylbiphenyl, glycidyl acrylate, glycidyl methacrylate, glycidyl propylene, 2-methyl-2-vinyl oxirane, vinyl pyridine, aminoethyl methacrylate, aminoethylphenyl acrylate, maleimide, N-phenyl maleimide, N-hexyl maleimide, N-vinyl-phthalimide, and N-vinyl maleimide poly(ethylene glycol) methyl ether acrylate, polyvinyl alcohol, vinyl pyrrolidone, vinyl 4-methylpyrrolidone, vinyl 4-phenylpyrrolidone, vinyl imidazole, vinyl 4-methylimidazole, vinyl 4-phenylimidazole, acrylamide, methacrylamide, N,N-dimethyl acrylamide, N-methyl acrylamide, N-methyl methacrylamide, aryloxy dimethyl acrylamide, N-methyl acrylamide, N-methyl methacrylamide, aryloxy piperidine, and N,N-dimethyl acrylamide acrylic acid, methacrylic acid, chloromethacrylic acid, maleic acid, allylamine, N,N-diethylallylamine, vinyl sulfonamide, sodium acrylate, sodium methacrylate, ammonium acrylate, ammonium methacrylate, acrylamidopropanetriethylammonium chloride, methacrylamidopropane-triethylammonium chloride, vinyl-pyridine hydrochloride, sodium vinyl phosphonate and sodium 1-methylvinylphosphonate, sodium vinyl sulfonate, sodium 1-methylvinyl-sulfonate, sodium styrenesulfonate, sodium acrylamidopropanesulfonate, sodium methacrylamidopropanesulfonate, and sodium vinyl morpholine sulfonate, allyl methacrylate, allyl acrylate, butenyl acrylate, undecenyl acrylate, undecenyl methacrylate, vinyl acrylate, and vinyl methacrylate; dienes such as butadiene and isoprene; esters of saturated glycols or diols with unsaturated monocarboxylic acids such as, ethylene glycol diacrylate, ethylene glycol dimethacrylate, triethylene glycol dimethacrylate, 1,4-butanediol dimethacrylate, 1,3-butanediol dimethacrylate, pentaerythritol tetraacrylate, trimethylol propane trimethacrylate, and polyfunctuional aromatic compounds such as divinylbenzene.

Surfactants that can be used in the present invention to synthesize the polymers include, for example, a sulfate, a sulfonate, a cationic compound, a reactive surfactant, an amphoteric compound, and a polymeric protective colloid. Specific examples are described in "McCutcheon's Emulsifiers and Detergents: 1995, North American Edition" and will be known to those skilled in the art.

For the encapsulation process, depending on the types of initiators used, the reaction temperature can vary from about 30°C to about 90°C. Preferably the reaction temperature is at least 40°C, and most preferably at least 50°C. To ensure that no free monomer is present, usually the reaction is continued for a time after the monomer addition. Also, more initiator may need to be added as a scavenger during the final stage of the reaction to increase the reaction conversion.

Addition polymerization initiators useful in the practice of the invention include, for example, azo and diazo compounds, such as 2,2'-azobisisobutyronitrile, 2,2'-azobis(2,4-dimethyl valeronitrile), 2,2'-azobis(2,3-dimethyl butyronitrile), 2,2'-azobis(2-methyl butyronitrile), 2,2'-azobis(2,3,3-trimethyl butyronitrile), 2,2'-azobis(2-isopropyl butyronitrile), 1,1'-azobis(cyclohexane-1-carbonitrile), 2, 2'-azobis(4-methoxyl-2,4-dimethyl valeronitrile), 2-(carbamoylazo)isobutyronitrile, 4,4'-azobis(4-cyanovaleric acid), and dimethyl -2,2'azobis isobutyrate, or peroxide compounds, such as butyl peroxide, propyl peroxide, butyryl peroxide, benzoyl isobutyryl peroxide, and benzoyl peroxide, or water soluble initiators, for example, sodium persulfate, and potassium persulfate, or any redox initiators. Preferred initiators are the oil soluble initiators. Examples of particularly suitable initiators are azo, peroxide, persulfate, and redox initiators. The initiators may be used in an amount varying from about 0.2 to 4 weight percent or higher by weight of the total monomers. A chain transfer agent such as butyl mercaptan may also be used to control the properties of the polymer formed.

The polymer particles used for dye loading in the invention above can be made, by any process known to those skilled in the art, including but not limited to, emulsion polymerization, dispersion polymerization, suspension polymerization, milling or solution/bulk polymerization and then post-emulsification. Detailed information about the process and the stabilizers can be found in *"Emulsion Polymerization and Emulsion Polymers"* (P. A. Lovell, M. S. El-Aasser, John Wiley & Sons, Ltd., England, 1997).

In a preferred embodiment of the invention, the polymer phase may contain at least one hydrophilic monomer unit. The hydrophilic monomer unit in the polymer latex may be selected from the group consisting of acrylic acid, methacrylic acid, chloromethacrylic acid, maleic acid, allylamine, N,N-diethylallylamine, vinyl sulfonamide, sodium acrylate, sodium methacrylate, ammonium acrylate, ammonium methacrylate, acrylamidopropanetriethylammonium chloride, methacrylamidopropane-triethylammonium chloride, vinyl-pyridine hydrochloride, sodium vinyl phosphonate and sodium 1-ethylvinylphosphonate, sodium vinyl sulfonate, sodium 1-methylvinyl-sulfonate and sodium styrenesulfonate. The hydrophilic monomers can also be non-ionic, such as ethyoxytriethylene glycol methacrylate, methoxypolyethylene oxide methacrylate, methoxypropylene oxide acrylate, polyethyleneoxide methacrylate, polyethylenoxide acrylate, and N-vinyl pyrrolidone.

The polymer phase employed in the invention in general has a Tg of -50 to 150°C, preferably 5 to 100°C, most preferably 10 to 80°C. The polymer dye particles used in the invention are present in the ink jet ink generally from 0.1 % to 20% by weight, preferably from 0.5% to 10% by weight.

The aqueous carrier medium for the ink composition is water or a mixture of water and at least one water miscible co-solvent. Selection of a suitable mixture depends on requirements of the specific application, such as desired surface tension and viscosity, the selected pigment, drying time of the pigmented ink jet ink, and the type of paper onto which the ink will be printed. Representative examples of water-miscible co-solvents that may be selected include (1) alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; (2) ketones or ketoalcohols such as acetone, methyl ethyl ketone and diacetone alcohol; (3) ethers, such as tetrahydrofuran and dioxane; (4) esters, such as ethyl acetate, ethyl lactate, ethylene carbonate, and propylene carbonate; (5) polyhydric alcohols, such as ethylene glycol, diethylene glycol, triethylene glycol, tetraethylene glycol, propylene glycol, polyethylene glycol, glycerol, 2-methyl-2,4-pentanediol 1,2,6-hexanetriol, and thioglycol; (6) lower alkyl mono- or diethers derived from alkylene glycols, such as ethylene glycol mono-methyl (or - ethyl) ether, diethylene glycol mono-methyl (or -ethyl) ether, diethylene glycol mono-butyl (or -ethyl) ether, propylene glycol mono-methyl (or -ethyl) ether, poly(ethylene glycol) butyl ether, triethylene glycol mono-methyl (or -ethyl) ether and diethylene glycol di-methyl (or -ethyl) ether; (7) nitrogen containing cyclic compounds, such as pyrrolidone, N-methyl-2-pyrrolidone, and 1,3-dimethyl-2-imidazolidinone; and (8) sulfur-containing compounds such as dimethyl sulfoxide, 2,2'-thiodiethanol, and tetramethylene sulfone.

The amount of aqueous carrier medium is in the range of approximately 70 to 99 weight %, preferably approximately 90 to 98 weight %, based on the total weight of the ink. A mixture of water and a polyhydric alcohol, such as diethylene glycol, is useful as the aqueous carrier medium. In a preferred embodiment, the inks contain from about 5 to about 60 weight % of water miscible organic solvent based on the total weight of the aqueous carrier medium.

Jet velocity, separation length of the droplets, drop size, and stream stability are greatly affected by the surface tension and the viscosity of the ink. Pigmented ink jet inks suitable for use with ink jet printing systems should have a surface tension in the range of about 20 dynes/cm to about 60 dynes/cm and, more preferably, in the range 30 dynes/cm to about 50 dynes/cm. Control of surface tensions in aqueous inks is accomplished by additions of small amounts of surfactants. The level of surfactants to be used can be determined through simple trial and error experiments, usually about 0.1% to about 6%, preferably 0.5% to about 4% by weight of the total ink composition. Anionic, cationic, and nonionic surfactants may be selected from those disclosed in U. S. Patents 5,324,349; 4,156,616; and 5,279,654 as well as many other surfactants known in the ink jet ink art. Commercial surfactants include the Surfynols® from Air Products; the Zonyls@ from DuPont and the Fluorads@ from 3M. Preferred surfactants can be silicon surfactants or fluorinated surfactants. Preferred silicon surfactants are available from BYK-Chemie as BYK surfactants, and from Crompton Corp. as Silwet® surfactants. Commercially available fluorinated surfactants can be the Zonyls® from DuPont and the Fluorads® from 3M, they can be used alone or in combination with other surfactants.

A humectant is added to the ink composition helps prevent the ink from drying out or crusting in the orifices of the ink jet printhead. Polyhydric alcohols useful in the composition employed in the invention for this purpose include, for example, ethylene glycol, diethylene glycol, triethylene glycol, propylene glycol, tetraethylene glycol, polyethylene glycol, glycerol, 2-methyl-2,4-pentanediol, 1,2,6-hexanetriol and thioglycol. The humectant may be employed in a concentration of from about 10 to about 50 % by weight of the entire ink composition. In a preferred embodiment, diethylene glycol or a mixture of glycerol and diethylene glycol is employed a concentration of between 10 and 20 % by weight of the entire ink composition.

The ink has physical properties compatible with a wide range of ejecting conditions, i.e., driving voltages and pulse widths for thermal ink jet printing devices, driving frequencies of the piezo element for either a drop-on-demand device or a continuous device, and the shape and size of the nozzle.

A penetrant (0-10% by weight) may also be added to the ink composition to help the ink penetrate the receiving substrate, especially when the substrate is a highly sized paper. A preferred penetrant for the inks employed in the present invention is n-propanol at a final concentration of 1-6 % by weight. A biocide (0.01-1.0% by weight) may also be added to prevent unwanted microbial growth which may occur in the ink over time. A preferred biocide for the inks employed in the present invention is Proxel® GXL (Zeneca Colours Co.) at a concentration of 0.05-0.5 % by weight. Additional additives which may optionally be present in ink jet inks include thickeners, conductivity enhancing agents, anti-kogation agents, pH buffering agents, drying agents, and defoamers.

The Ink jet inks of this invention are employed in ink jet printing wherein liquid ink drops are applied in a controlled fashion to an ink receiving substrate, by ejecting ink droplets from plurality of nozzles, or orifices, in a print head of ink jet printers. Commercially available ink jet printers use several different methods to control the deposition of the ink droplets. Such methods are generally of two types: continuous stream and drop-on-demand. In drop-on-demand systems, a droplet of ink is ejected from an orifice directly to a position on the ink receiving layer by pressure created by, for example, a piezoelectric device, an acoustic device, or a thermal process controlled in accordance digital data signals. An ink droplet is not generated and ejected through the orifices of the print head unless it is needed. Ink jet printing methods, and related printers, are commercially available and need not be described in detail.

The following examples are intended to illustrate, but not limit, the present invention:

### EXAMPLES

The following dyes were used in the present invention:

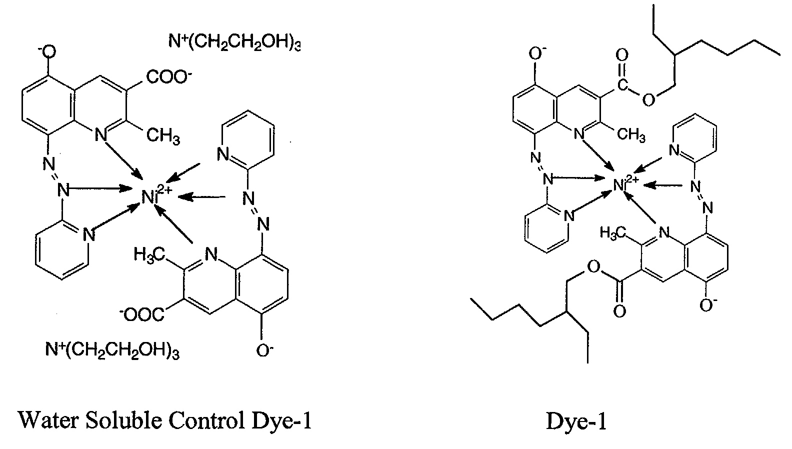

### Preparation of Polymer Particles for Loading

### Comparative Polymer Particles 1 (PC-1: Acrylate) (SKE)

160 g of deionized water and 0.6 g Olin 10G® surfactant were charged to a 1-liter, three-neck round-bottom flask equipped with a mechanical stirrer and nitrogen inlet. The solution was purged with nitrogen for 30 min and heated to 80°C in a constant temperature bath. 16.0 g of styrene, 18.0 g of butyl methacrylate, and 6.0 g of methacrylic acid were added and stirred for three minutes. 16.4 g of 10% sodium persulfate solution and 5.5 g of 10% sodium metabisulfite solution were added to initiate the polymerization. Polymerization was continued for one hour and heated one more hour at 80°C. The temperature was reduced to 65-70°C, and 1 ml each of t-butyl hydroperoxide (10%) and sodium formaldehyde bisulfite (10%) were post-added. The mixture was cooled and filtered. The dispersion contains 20.1 % solid by weight.

### Comparative Polymer Particles 2 (PC-2: Acrylate) (KE 85/15)

Similar process was used to prepare the PC-2 polymer particles as PC-1, except different polymer composition with 16.0 g of styrene, 18.0 g of butyl methacrylate, and 6.0 g of methacrylic acid were used. The dispersion contains 18.8% solid by weight.

### Comparative Polymer Particles 3 (PC-3: Acrylate) (BE 85/15)

Similar process was used to prepare the PC-3 polymer particles as PC-1, except different polymer composition with 34.0 g of butyl acrylate and 6.0 g of methacrylic acid were used. The dispersion contains 19.4% solid by weight.

### Polymer Particles 1 of the Invention (PI-1) PVc (10/90)

120 g deionized water were charged to a 500 mL 1-neck round-bottom flask equipped with mechanical stirrer. The flask was first flushed with nitrogen for 20 minutes, then immersed in a constant temperature bath at 40°C. Afterwards, 0.25 g of potassium persulfate, 0.35 g sodium metabisufite, 2.0 g Triton 770 (30% active), 4.0 g of ethyl acrylate, and 36.0 g vinylidene chloride were added to the flask. The polymerization reaction was continued for additional 12 hours. The mixture was cooled and filtered. The final polymer dispersion contained 24.4% solid by weight and the average particle size is 0.016 µm.

### Polymer Particles 2 of the Invention (PI-2) PVcEd (30/65/5)

Similar process was used to prepare the PI-2 polymer particles as PI-1, except different polymer composition with 12.0 g of ethyl acrylate, 26.0 g vinylidene chloride, and 2.0 g of ethylene glycol dimethacrylate were used. The dispersion contains 29.8% solid by weight, and the average particle size is 0.057 µm.

### Polymer Particles 3 of the Invention (PI-3) PVcIt (10/88/2)

Similar process was used to prepare the PI-3 polymer particles as PI-1, except different polymer composition with 4.0 g of ethyl acrylate, 35.2 g vinylidene chloride, and 0.8 g of itatic acid were used. The dispersion contains 19.8% solid by weight and the average particle size is 0.015 µm.

### Polymer Particles 4 of the Invention (PI-4) PVcMn (15/83/2)

120 g deionized water were charged to a 500 mL 1-neck round-bottom flask equipped with mechanical stirrer. The flask was first flushed with nitrogen for 20 minutes, then immersed in a constant temperature bath at 40 °C. Afterwards, 0.25 g of potassium persulfate, 0.35 g sodium metabisufite, 2.0 g Triton 770 (30% active), 6.0 g of ethyl acrylate, 33.2 g vinylidene chloride, and 0.8 g of hydroxylethyl methacrylate were added to the flask. The polymerization reaction was continued for additional 12 hours. The mixture was cooled and filtered. The final polymer dispersion contained 24.3% solid by weight, and the average particle size is 0.017 µm.

### Preparation ofDye-Loaded Polymer Particles

### Dye-loaded Polymer Control Dispersion 1 (DC-1, Acrylate) (SKE)

1.0 g of Dye-1 was dissolved in 20.0 g of ethyl acetate at 65°C. This solution was combined with an aqueous mixture containing 25.6 g of a 19.53% solids dispersion of particles PC-1 acrylate, 5.64 g of a 8.87% aqueous solution of Pionin A44SP® surfactant, and 17.76 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained particles with an average size of 0.049 µm and a composition of 2.11 % Dye-1, 9.72% PC-1 acrylate polymer, 1% Pionin A44SP® surfactant, and 87.17% water, all by weight.

### Dye-loaded Polymer Control Dispersion 2 (DC-2, Acrylate) (KE 85/15)

1.0 g of Dye-1 was dissolved in 20.0 g of ethyl acetate at 65°C. This solution was combined with an aqueous mixture containing 26.57 g of a 18.82% solids dispersion of particles PC-2 acrylate, 5.64 g of a 8.87% aqueous solution of Pionin A44SP® surfactant, and 16.80 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained particles with an average size of 0.097 µm and a composition of 1.80 % Dye-1, 8.98% PC-2 acrylate polymer, 1% Pionin A44SP® surfactant, and 88.22% water, all by weight.

### Dye-loaded Polymer Control Dispersion 3 (DC-3, Acrylate) (BE 85/15)

1.0 g of Dye-1 was dissolved in 20.0 g of ethyl acetate at 65°C. This solution was combined with an aqueous mixture containing 25.81 g of a 19.37% solids dispersion of particles PC-3 acrylate, 5.64 g of a 8.87% aqueous solution of Pionin A44SP® surfactant, and 17.55 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained particles with an average size of 0.125 µm and a composition of 1.83 % Dye-1, 9.14% PC-3 acrylate polymer, 1 % Pionin A44SP® surfactant, and 88.03% water, all by weight.

### Dye-loaded Polymer Inventive Dispersion 1 (DI-1) PVc (10/90)

A dispersion of Dye-1 particles in an aqueous solution was made in the following manner. 2.0 g of Dye-1 was dissolved in 40.0 g of ethyl acetate at 65°C. This solution was combined with 11.27 g of an 8.87% aqueous solution of Pionin A44SP® surfactant and 86.73 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained Dye-1 particles with an average size of 0.086 µm and a composition of 2.30% Dye-1, 1% Pionin A44SP® surfactant, and 96.7% water, all by weight. 20.0 g of this dispersion of Dye-1 particles was combined with 10.20 g of a 22.55% solids dispersion of polymer particles PI-1, 3.60 g of a 10% solution of Pionin A44SP® surfactant, and 2.20 g of high purity water. The composition of the final mixture was 1.28% Dye-1, 6.39% polymer particles PI-1, 1% Pionin A44SP® surfactant, and 91.33% high purity water, all by weight. The mixture was held, without stirring, for 7 days at 50°C. After this time, the particle size of the mixture was 0.057 µm.

### Dye-loaded Polymer Inventive Dispersion 2 (DI-2) (P/Vc/Ed 30/65/5)

A dispersion of Dye-1 particles in an aqueous solution was made in the following manner: 10.0 g of Dye-1 was dissolved in 200.0 g of ethyl acetate at 65°C. This solution was combined with 22.55 g of an 8.87% aqueous solution of Pionin A44SP® surfactant and 167.45 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained Dye-1 particles with an average size of 0.151 µm and a composition of 5.48% Dye-1, 1% Pionin A44SP® surfactant, and 93.52% water, all by weight. 18.25 g of this dispersion of Dye-1 particles were combined with 16.80 g of a 29.77% solids dispersion of polymer particles PI-2, 5.0 g of a 10% solution of Pionin A44SP® surfactant, and 9.96 g of high purity water. The composition of the final mixture was 2.0% Dye-1, 10.0% polymer particles PI-2, 1% Pionin A44SP® surfactant, and 89.0% high purity water, all by weight. The mixture was held, without stirring, for 5 days at 50°C. After this time, the particle size of the mixture was 0.055 µm.

### Dye-loaded Polymer Inventive Dispersion 3 (DI-3) (P/Vc/It 30/65/5)

A dispersion of Dye-1 particles in an aqueous solution was made in the following manner. 10.0 g of Dye-1 was dissolved in 200.0 g of ethyl acetate at 65°C. This solution was combined with 22.55 g of a 8.87% aqueous solution of Pionin A44SP® surfactant and 167.45 g of high-purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained Dye-1 particles with an average size of 0.151 µm and a composition of 5.48% Dye-1, 1% Pionin A44SP® surfactant, and 93.52% water, all by weight. 18.25 g of this dispersion of Dye-1 particles was combined with 17.34 g of a 28.84% solids dispersion of polymer particles PI-3, 5.0 g of a 10% solution of Pionin A44SP® surfactant, and 9.41 g of high purity water. The composition of the final mixture was 2.0% Dye-1, 10.0% polymer particles PI-3, 1 % Pionin A44SP® surfactant, and 89.0% high purity water, all by weight. The mixture was held, without stirring, for 5 days at 50°C. After this time, the particle size of the mixture was 0.074 µm.

### Dye-loaded Polymer Inventive Dispersion 4 (DI-4) (P/Vc/Mn 15/83/2)

A dispersion of Dye-1 particles in an aqueous solution was made in the following manner: 2.0 g of Dye-1 was dissolved in 40.0 g of ethyl acetate at 65°C. This solution was combined with an aqueous solution containing 11.27 g of a 8.87% aqueous solution of Pionin A44SP® surfactant and 86.73 g of high purity water. The mixture was sonicated for 1 minute with an ultrasonic probe, then passed five times though a high-pressure homogenizer at a pressure of 7200 psi. The organic solvent was evaporated off under reduced pressure at 65°C. The final dispersion contained Dye-1 particles with an average size of 0.086 µm and a composition of 2.30% Dye-1, 1% Pionin A44SP® surfactant, and 96.7% water, all by weight. 20.0 g of this dispersion of Dye-1 was combined with 9.99 g of a 22.55% solids dispersion of polymer particles PI-4, 3.60 g of a 10% solution of Pionin A44SP® surfactant, and 2.41 g of high purity water. The composition of the final mixture was 1.28% Dye-1, 6.39% polymer particles PI-4, 1 % Pionin A44SP® surfactant, and 91.33% high purity water, all by weight. The mixture was held, without stirring, for 7 days at 50°C. After this time, the particle size of the mixture was 0.060 µm.

### Preparation of polymer-dye Particle Dispersions

### Polymer-dye Particle Dispersion 1 (PD-1) PVcMn (5/83/2)

In a 250 ml beaker, 1 g of Dye 1 was added, and also added were 0.9 g of ethyl acrylate, 5.2 g vinylidene chloride, and 0.1 g of hydroxylethyl methacrylate and 0.5 g of ethyl acetate. After the addition, the mixture was well stirred. In another beaker, 50 g of deionized water, 0.6 g of sodium dodecyl sulfonate surfactant, and 1.8 g of hexadecane were added and well stirred. The organic phase and the aqueous phase were agitated violently under either sonification or microfluidizer for more than 20 minutes. The organic aqueous mixture was added to the reactor, and 0.09 g of initiator azobisisobutyronitrile (AIBN) in 1 gram of toluene was then added to the reactor, and the reaction temperature was set at 40°C. The reaction was allowed to continue for 12 more hours before the reactor was cooled down to room temperature. The organic solvent was removed under reduced pressure. The polymer-dye particle dispersion prepared was filtered through glass fibers to remove any coagulum. The particles made contain about 50% by weight of a colorant phase and about 50% by weight of a polymer phase. The initiator was added before the sonification or microfluidizer. The particle size was measured by a Microtrac Ultra Fine Particle Analyzer (Leeds and Northrup) at a 50% median value. The final dispersion was neutralized with sodium bicarbonate solution to pH 7.0. The polymer-dye particles are designated as Polymer-dye Particle Dispersion 1 (DI-5).

### Polymer-dye Particle Dispersion 2 (PD-2) PVc (17/83)

Polymer-dye Particle Dispersion 2 was prepared in a similar manner to Polymer-dye Particle Dispersion 1 except 0.9 g of ethyl acrylate, 4.39 g of vinylidene chloride and 0.5 g of ethyl acetate were used as polymer composition to prepare the polymer-dye particle dispersion 2 (PD-2).

### Comparative Polymer-dye Particle Dispersion (PD-3) SKDy (40/40/20)

Comparative Polymer-dye Particle Dispersion (PD-3) was prepared in a similar manner to Polymer-dye Particle Dispersion 1 (PD-1) except 2.4 g of styrene, 2.4 butyl methacrylate, and 1.2 g of divinyl benzene were used as polymer composition to prepare the polymer-dye particle dispersion.

### Ink Preparation

The inks used in the present invention are prepared as follows, and they are summarized in Table 1:

**Table 1**

| Ink | Dye | Polymer Particles | Dye-Containing Polymer Dispersion |
|---|---|---|---|
| C-1 | Water soluble dye-1 | - | - |
| C-2 | Dye-1 | PC-1 | DC-1 |
| C-3 | Dye-1 | PC-2 | DC-2 |
| C-4 | Dye-1 | PC-3 | DC-3 |
| I-1 | Dye-1 | PI-1 | DI-1 |
| 1-2 | Dye-1 | PI-2 | DI-2 |
| I-3 | Dye-1 | PI-3 | DI-3 |
| I-4 | Dye-1 | PI-4 | DI-4 |
| C-5 | Dye-1 | - | PD-3 |
| I-5 | Dye-1 | - | PD-1 |
| I-6 | Dye-1 | - | PD-2 |

### Comparative Ink 1 (Ink C-1) (Water Soluble Dye/No Polymer in Ink)

To prepare a comparative ink jet ink, 0.6 g of Control Dye 1 (10% active), 0.05 g Surfynol® 465 (Air Products, Inc.), 1.2 g diethylene glycol, 1.0 g of glycerol, and 0.3 g di(propyleneglycol) methyl ether (Dowanol® DPM) were added distilled water so that the final ink is 10.0 g. The final ink contained 0.6% Control Dye-1, 0.50% Surfynol® 465, 12% diethylene glycol, 10% glycerol, and 3% di(propyleneglycol) methyl ether). The final ink was filtered through a 1 µm polytetrafluoroethylene filter.

### Comparative Ink 2 (Ink C-2) (Water Insoluble Dye/Acrylate)

This ink was prepared similar to Comparative Ink 1 (Ink C-1) except that Dye-loaded Polymer Dispersion DC-1 was used instead of Control Dye 1. To prepare this ink, 5.0 g of Dye-loaded Polymer Dispersion DC-1, 0.05 g Surfynol® 465 (Air Products Inc.), 1.2 g diethylene glycol, 0.6 g glycerol, and 0.3 g di(propyleneglycol) methyl ether (Dowanol® DPM) were added distilled water so that the final ink is 10.0 g. The final ink contained 50% of the Dye-loaded Polymer Dispersion DC-1 (about 2% active), 0.50% Surfynol® 465, 12.0% diethylene glycol, 6% glycerol, and 3% di(propyleneglycol) methyl ether. The final ink was filtered through a 1 µm polytetrafluoroethylene filter.

### Comparative Ink 3 (Ink C-3) (Water Insoluble Dye/Acrylate)

This ink was prepared similar to Comparative Ink 2 (Ink C-2) except that Dye-loaded Polymer Dispersion DC-2 was used instead of Dye-loaded Polymer Dispersion DC-1.

### Comparative Ink 4 (Ink C-4) (Water Insoluble Dye/Acrylate)

This ink was prepared similar to Comparative Ink 2 (Ink C-2) except that Dye-loaded Polymer Dispersion DC-3 was used instead of Dye-loaded Polymer Dispersion DC-1.

### Comparative Ink 5 (Ink C-5) (Polymer-dye Particle made of Water Insoluble Dye and Acrylate)

This ink was prepared similar to Comparative Ink 2 (Ink C-2) except that Polymer-dye Particle Dispersion PD-3 was used instead of Dye-loaded Polymer Dispersion DC-1.

### Ink 1 of the Invention (Ink I-1) (Water Insoluble Dye/Polymer containing halogenated monomer)

To prepare this Ink 1 of the Invention, 5.0 g of Dye-loaded Polymer Dispersion DI-1, 0.05 g Surfynol® 465 (Air Products, Inc.), 1.2 g diethylene glycol, 0.6 g glycerol, and 0.3 g di(propyleneglycol) methyl ether (Dowanol® DPM) were added distilled water so that the final ink is 10.0 g. The final ink contained 50% of the Dye-loaded Polymer Dispersion DI-1 (about 2% active), 0.50% Surfynol® 465, 12.0% diethylene glycol, 6% glycerol, and 3% di(propyleneglycol) methyl ether. The final ink was filtered through a 1 µm polytetrafluoroethylene filter.

### Ink 2 of the Invention (Ink I-2) (Water Insoluble Dye/Polymer containing halogenated monomer)

Ink I-2 was prepared similar to Ink 1 of the Invention except that the Dye-loaded Polymer Dispersion DI-2 was used instead of Dye-loaded Polymer Dispersion DI-1.

### Ink 3 of the Invention (Ink I-3) (Water Insoluble Dye/Polymer containing halogenated monomer)

Ink I-3 was prepared similar to Ink 1 of the Invention except that the Dye-loaded Polymer Dispersion DI-2 was used instead of Dye-loaded Polymer Dispersion DI-1.

### Ink 4 of the Invention (Ink I-4) (Water Insoluble Dye/Polymer containing halogenated monomer)

Ink I-4 was prepared similar to Ink 1 of the Invention except that the Dye-loaded Polymer Dispersion DI-4 was used instead of Dye-loaded Polymer Dispersion DI-1.

### Ink 5 of the Invention (Ink I-5) (Polymer-Dye Particles Made from Water Insoluble Dye with Polymer containing halogenated monomer)

Ink I-5 was prepared similar to Ink 1 of the Invention except that the Polymer-dye Particle Dispersion PD-1 was used instead of Dye-loaded Polymer Dispersion DI-1.

### Ink 6 of the Invention (Ink I-6) (Polymer-Dye Particles Made from Water Insoluble Dye with Polymer containing halogenated monomer)

Ink I-6 was prepared similar to Comparative Ink 2 (Ink C-2) except that the Polymer-dye Particle Dispersion PD-2 was used instead of Dye-loaded Polymer Dispersion DI-1.

### Ink Firability Test

The inks used in the present invention were filled into Epson 880 empty cartridges, and printing was done with an Epson 880 Inkjet printer, using the above inks. All inks of the invention fired well through the Epson 880 printer, no nozzles were clogged. The inks were left in printer for over 48 hours, and the above printing test was repeated. All the nozzles were firing with minimum cleaning cycles without any problems for the inks of the present invention.

### Element Preparation

### Comparative Element 1 (C-1a) (Water Soluble Dye/No Polymer in Ink)

The Comparative Ink 1 (Ink C-1) was filtered through a 1 µm polytetrafluoroethylene filter and filled into an airbrush (Paasche Sirbrush Set H-3 available from Paasche Airbrush Company, Harwood Heights, IL) connected to compressed house air. The pressure of the airbrush was adjusted to about 20 1b. such that smooth ink flow was obtained. The inks were sprayed onto commercially available Epson Premium Glossy Paper, Cat. No. SO41286, using the above ink with variable density levels. The sample was allowed to dry for 24 hours at ambient temperature and humidity.

### Comparative Element 2 (C-1b) (Water Soluble Dye/No Polymer in Ink)

Comparative Element 2 was prepared similar to Comparative Element 1 except that a commercially available paper, Kodak Instant-Dry Photographic Glossy Media (Cat. 8103137), was used instead of Epson Premium Glossy Paper.

### Comparative Element 3 (C-2q) (Water Insoluble Dye/Acrylate)

Comparative Element 3 was prepared similar to Comparative Element 1 except that Comparative Ink 2 (Ink C-2) was used instead of Comparative Ink 1 (Ink C-1).

### Comparative Element 4 (C-2b) (Water Insoluble Dye/Acrylate)

Comparative Element 4 was prepared similar to Comparative Element 3 except that a commercially available paper, Kodak Instant-Dry Photographic Glossy Media (Cat. 8103137), was used instead of Epson Premium Glossy Paper.

### Comparative Element 5 (C-3a) (Water Insoluble Dye/Acrylate)

Comparative Element 5 was prepared similar to Comparative Element 1 except that Comparative Ink 3 (Ink C-3) was used instead of Comparative Ink 1 (Ink C-1).

### Comparative Element 6 (C-3b) (Water Insoluble Dye/Acrylate)

Comparative Element 6 was prepared similar to Comparative Element 5 except that a commercially available paper, Kodak Instant-Dry Photographic Glossy Media (Cat. 8103137), was used instead of Epson Premium Glossy Paper.

### Comparative Element 7 (C-4a) (Water Insoluble Dye/Acrylate)

Comparative Element 7 was prepared similar to Comparative Element 1 except that Comparative Ink 4 (Ink C-4) was used instead of Comparative Ink 1 (Ink C-1).

### Comparative Element 8 (C-4b) (Water Insoluble Dye/Acrylate)

Comparative Element 8 was prepared similar to Comparative Element 7 except that a commercially available paper, Kodak Instant-Dry Photographic Glossy Media (Cat. 8103137), was used instead of Epson Premium Glossy Paper.

### Comparative Element 9 (C-5a) (Polymer-dye Particle made of Water Insoluble Dye and Acrylate)

Comparative Element 9 was prepared similar to Comparative Element 1 except that Comparative Ink 5 (Ink C-5) was used instead of Comparative Ink 1 (Ink C-1).

### Comparative Element 10 (C-5b) (Polymer-dye Particle made of Water Insoluble Dye and Acrylate)

Comparative Element 10 was prepared similar to Comparative Element 7 except that a commercially available paper, Kodak Instant-Dry Photographic Glossy Media (Cat. 8103137), was used instead of Epson Premium Glossy Paper.

### Element 1 of the Invention (I-1a) (Water Insoluble Dye/Polymer Containing halogenated monomer)

Element 1 of the Invention was prepared similar to Comparative Element 1 except that Inventive Ink 1 (Ink I-1) was used instead of Comparative Ink 1 (Ink C-1).

### Element 2 of the Invention (I-1b) (Water Insoluble Dye/Polymer Containing halogenated monomer)

Element 2 of the Invention was prepared similar to Element 1 of the Invention except that a commercially available paper, Kodak Instant-Dry Photographic Glossy Media (Cat. 8103137), was used instead of Epson Premium Glossy Paper.

### Element 3 of the Invention (I-2a) (Water Insoluble Dye/Polymer Containing halogenated monomer)

Element 3 of the Invention was prepared similar to Comparative Element 1 except that Inventive Ink 2 (Ink I-2) was used instead of Comparative Ink 1 (Ink C-1).

### Element 4 of the Invention (I-2b) (Water Insoluble Dye/Polymer Containing halogenated monomer)

Element 4 of the Invention was prepared similar to Element 3 of the Invention except that a commercially available paper, Kodak Instant-Dry Photographic Glossy Media (Cat. 8103137), was used instead of Epson Premium Glossy Paper.

### Element 5 of the Invention (I-3a) (Water Insoluble Dye/Polymer Containing halogenated monomer)

Element 5 of the Invention was prepared similar to Comparative Element 1 except that Inventive Ink 3 (Ink I-3) was used instead of Comparative Ink 1 (Ink C-1).

### Element 6 of the Invention (I-3b) (Water Insoluble Dye/Polymer Containing halogenated monomer)

Element 6 of the Invention was prepared similar to Element 5 of the Invention except that a commercially available paper, Kodak Instant-Dry Photographic Glossy Media (Cat. 8103137), was used instead of Epson Premium Glossy Paper.

### Element 7 of the Invention (I-4a) (Water Insoluble Dye/Polymer Containing halogenated monomer)

Element 7 of the Invention was prepared similar to Comparative Element 1 except that Inventive Ink 4 (Ink I-4) was used instead of Comparative Ink 1 (Ink C-1).

### Element 8 of the Invention (I-4b) (Water Insoluble Dye/Polymer Containing halogenated monomer)

Element 8 of the Invention was prepared similar to Element 7 of the Invention except that a commercially available paper, Kodak Instant-Dry Photographic Glossy Media (Cat. 8103137), was used instead of Epson Premium Glossy Paper.

### Element 9 of the Invention (I-5a) (Polymer-Dye Particles Made from Water Insoluble Dye with Polymer containing halogenated monomer)

Element 9 of the Invention was prepared similar to Comparative Element 1 except that Inventive Ink 5 (Ink I-5) was used instead of Comparative Ink 1 (Ink C-1).

### Element 10 of the Invention (I-5b) (Polymer-Dye Particles Made from Water Insoluble Dye with Polymer containing halogenated monomer)

Element 10 of the Invention was prepared similar to Element 9 of the Invention except that a commercially available paper, Kodak Instant-Dry Photographic Glossy Media (Cat. 8103137), was used instead of Epson Premium Glossy Paper.

### Element 11 of the Invention (I-6a) (Polymer-Dye Particles Made from Water Insoluble Dye with Polymer containing halogenated monomer)

Element 11 of the Invention was prepared similar to Comparative Element 1 except that Inventive Ink 6 (Ink I-6) was used instead of Comparative Ink 1 (Ink C-1).

### Element 12 of the Invention (I-6b) (Polymer-Dye Particles Made from Water Insoluble Dye with Polymer containing halogenated monomer)

Element 12 of the Invention was prepared similar to Element 11 of the Invention except that a commercially available paper, Kodak Instant-Dry Photographic Glossy Media (Cat. 8103137), was used instead of Epson Premium Glossy Paper.

### Stability Tests

The above elements were subjected to ozone test. Ozone stability test was done by placing the above elements in an ozone chamber (∼5 ppm ozone level, 50% relative humidity) for 24 hours. The Status A reflection densities of density patches of the elements with initial density level of 1.0 were measured using an X-Rite® 414 densitometer before and after the ozone fade test. The percentages of the Status A densities retained were calculated and are listed in Table 2.

**Table 2**

| Element | Ink | Ozone Stability (% Retained at Density 1.0) |
|---|---|---|
| C-1a | Ink C-1 | 7 |
| C-2a | Ink C-2 | 14 |
| C-3a | Ink C-3 | 8 |
| C-4a | Ink C-4 | 21 |
| I-1a | Ink I-1 | 80 |
| I-2a | Ink I-2 | 89 |
| I-3a | Ink I-3 | 86 |
| I-4a | Ink I-4 | 78 |
| C-5a | Ink C-5 | 18 |
| I-5a | Ink I-5 | 47 |
| I-6a | Ink I-6 | 43 |
| C-1b | Ink C-1 | 26 |
| C-2b | Ink C-2 | 22 |
| C-3b | Ink C-3 | 9 |
| C-4b | Ink C-4 | 18 |
| I-1b | Ink I-1 | 94 |
| I-2b | Ink I-2 | 76 |
| I-3b | Ink I-3 | 84 |
| I-4b | Ink I-4 | 80 |
| C-5b | Ink C-5 | 22 |
| I-5b | Ink I-5 | 56 |
| I-6b | Ink I-6 | 45 |

The above results show that the inks of the invention show significant ozone stability improvement compared with inks formulated with water soluble dye, a further significant image stability improvement towards ozone was achieved using inks of the present invention, which contain polymer dye particles having at least one halogenated vinyl monomer, as compared to inks containing regular acrylates having no halogenated vinyl monomer units.

## Claims

1. An ink jet ink composition comprising polymer dye particles, said polymer dye particles comprising a polymer phase associated with a water-insoluble dye, wherein said polymer phase comprises at least one halogenated vinyl monomer.

2. The composition of claim 1 wherein the halogenated vinyl monomer is vinyl chloride, vinylidene chloride, vinyl fluoride, vinylidene fluoride, vinyl bromide, vinylidene bromide, or chloromethacrylic acid.

3. The composition of claims 1 to 2 wherein the polymer phase is comprised of at least 5 mol % halogenated vinyl monomer units based on the total monomer units in the polymer phase.

4. The composition of claims 1 to 3 wherein the polymer phase is comprised of at least 20 mol% halogenated vinyl monomer units based on the total monomer units in the polymer phase.

5. The composition of claims 1 to 4 wherein the halogenated vinyl monomer is an ethylenically-unsaturated monomer capable of addition polymerization.

6. The composition of claims 1 to 5 wherein the polymer phase is a copolymer further comprising an ethylenically-unsaturated monomer capable of addition polymerization.

7. The ink jet ink composition of claims 1 to 6 wherein the polymer dye particles have an average particle size of less than 1 µm.

8. The ink jet ink composition of claims 1 to 7 wherein the polymer dye particles have an average particle size of less than 0.2 µm.

9. The inkjet ink composition of claims 1 to 8 wherein the polymer phase has a molecular weight of greater than about 5000.

10. The ink jet ink composition of claims 1 to 9 wherein the polymer dye particles are formed by a dye loading process comprising
I) forming a colorant solution comprising a water insoluble dye and an organic solvent;
II) combining said colorant solution with an aqueous mixture, said aqueous mixture comprising a surfactant and polymer particles comprising at least one halogenated vinyl monomer, to form a colorant mixture/aqueous mixture;
III) causing the colorant mixture/aqueous mixture to form a dispersion of dye particles and polymer particles via agitation; and
IV) removing the organic solvent to form an aqueous dispersion of polymer dye particles.

11. The ink jet ink composition of claims 1 to 9 wherein the polymer dye particles are made by a process comprising, in order:
I) forming a colorant mixture comprising a water insoluble dye and an organic medium containing at least one halogenated vinyl monomer;
II) combining said colorant mixture with an aqueous mixture comprising a surfactant and a co-stabilizer to form a colorant mixture/aqueous mixture;
III) causing the colorant mixture/aqueous mixture to form a stable aqueous droplet mixture via strong agitation; and
IV) initiating polymerization to form composite polymer dye particles comprising a colorant phase and a polymer phase;
wherein an addition polymerization initiator is added prior to initiating polymerization.

12. An ink jet printing method, comprising the steps of:
A) providing an ink jet printer that is responsive to digital data signals;
B) loading said printer with an ink jet recording element comprising a support having thereon an image-receiving layer;
C) loading said printer with the ink jet ink composition of claims 1 to 11;
D) printing on said image-receiving layer using said ink jet ink composition in response to said digital data signals.
